# EUROPÄISCHE PATENTANMELDUNG

(11) **EP 2 337 321 A2**
(43) Veröffentlichungstag der Anmeldung: **22.06.2011**
(21) Anmeldenummer: 10188663.8
(22) Anmeldetag: 25.10.2010
(51) Int. Cl.: H04M 1/677, H04M 1/272

(54) **Notruftelefon**

(30) Priorität: 21.12.2009 DE 102009055096
(71) Anmelder: Robert Bosch GmbH, 70442 Stuttgart (DE)
(72) Erfinder: Stauffer, Ludovic, 2400 Le Locle (CH); Perrenoud, Daniel, 2400 Le Prevoux (CH); Geissbuehler, Jean-Paul, 2207 Coffrane (CH); Reis, Markus, 1787 Motier (CH); Thuersam, Markus, 2300 La Chaux-De-Fonds (CH); Theunissen, Peter, 71717 Beilstein (DE); Frei, Martin, 2300 La Chaux-De-Fonds (CH); Elter, David, 30853 Langenhagen (DE)

(57) **Zusammenfassung**

Es wird ein Notruftelefon 1 mit einer Notruftaste 6 vorgeschlagen, das dazu ausgebildet ist, bei und/oder nach Betätigung der Notruftaste 6 einen Notruf an eine Zieladresse 11 abzusetzen, wobei das Notruftelefon 1 ein Gehäuse 2 aufweist, das dazu ausgebildet ist, zumindest teilweise werkzeug- und/oder zerstörungsfrei geöffnet und wieder verschlossen zu werden. Das Notruftelefon 1 weist eine Speichereinrichtung 16 zur Speicherung von Funktionen und Daten auf, wobei diese dazu ausgebildet ist, aus dem Gehäuse 2 entnommen und wieder eingesetzt oder durch eine andere Speichereinrichtung 16 ersetzt zu werden.

## Beschreibung

Die Erfindung betrifft ein Notruftelefon mit einer Notruftaste, wobei das Notruftelefon dazu ausgebildet ist, bei und/oder nach Betätigung der Notruftaste einen Notruf an mindestens eine Zieladresse abzusetzen. Das Notruftelefon weist ein Gehäuse auf, das dazu ausgebildet ist, zumindest teilweise werkzeug-und/oder zerstörungsfrei geöffnet und wieder verschlossen zu werden. Es weist weiterhin eine Speichereinrichtung zur Speicherung von Funktionen und Daten auf. Außerdem betrifft die Erfindung ein Verfahren zum Entnehmen und Wiedereinsetzen einer Speichereinrichtung in das Notruftelefon und ein Verfahren zum Ersetzen der Speichereinrichtung durch eine andere Speichereinrichtung in dem Notruftelefon.

Notruftelefone sind im Allgemeinen bekannt und werden üblicher Weise dazu eingesetzt, in einer Not- und/oder Gefahrensituation einen Alarm über ein Telefonnetz an eine Notrufzentrale oder eine andere Hilfe leistende Person abzusetzen. Vor allem Menschen im fortgeschrittenen Alter und hilfsbedürftige Menschen haben die Möglichkeit, schnell und unkompliziert Hilfe anzufordern, indem sie eine Notruftaste des Notruftelefons drücken.

Die Druckschrift DE100 2006 047 590 A1, die wohl den nächstliegenden Stand der Technik bildet, beschreibt eine reinigungsfreundliche Tastenvorrichtung, die als eine Hausnotrufvorrichtung ausgebildet ist. Die Tastenvorrichtung weist ein Gehäuse mit Gehäuseteilen auf, die trennbar miteinander verbunden sind. So kann die Tastenvorrichtung in einfacher Weise geöffnet werden und ein Zugang zu einzelnen Tasten bzw. einem Innenausstattung der Tastenvorrichtung ermöglicht werden. Vorteilhaft ist eine problemlose Reinigung der Tastenvorrichtung.

### Offenbarung der Erfindung

Im Rahmen der Erfindung wird ein Notruftelefon mit den Merkmalen des Anspruchs 1, ein Verfahren zum Entnehmen und Wiedereinsetzen einer Speichereinrichtung in das Notruftelefon mit den Merkmalen des Anspruchs 13 und ein Verfahren zum Ersetzen der Speichereinrichtung durch eine andere Speichereinrichtung in dem Notruftelefon mit den Merkmalen des Anspruchs 14 vorgeschlagen. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird ein Notruftelefon mit einer Notruftaste vorgeschlagen. Das Notruftelefon ist dazu ausgebildet, nach einer Betätigung der Notruftaste einen Notruf an mindestens eine Zieladresse abzusetzen. Vorzugsweise ist die Notruftaste am Notruftelefon optisch hervorgehoben, indem sie zum Beispiel eine auffällige Größe oder Farbe aufweist. Insbesondere erfolgt die Betätigung der Notruftaste durch ein Drücken des Benutzers. Bei dem Benutzer handelt es sich oft um ältere, kranke oder hilfsbedürftige Personen, die gerne weitgehend selbstständig leben möchten und dabei die Sicherheit besitzen, jederzeit die Zieladresse kontaktieren zu können. Diese kann eine Notrufzentrale, eine Haus- und/oder Stationsverwaltung, z.B. bei betreutem Wohnen, oder eine vertraute Person des Benutzers sein. Eine mögliche Ausgestaltung der Erfindung sieht vor, dass das Notruftelefon ein Mikrofon und einen Lautsprecher aufweist, über die eine Kommunikation zwischen dem Benutzer und der Zieladresse erfolgen kann. Denkbar ist auch, dass über den Lautsprecher Sprachmitteilungen z.B. über Voice Mail, an den Benutzer ausgegeben werden können.

Das Notruftelefon weist ein Gehäuse insbesondere in handlicher Größe auf. Es ist vorzugsweise dazu ausgebildet, an einer Wand montiert oder auf einer Fläche abgestellt zu werden. Das Gehäuse kann zumindest teilweise zerstörungsfrei geöffnet und wieder verschlossen werden. Vorzugsweise umfasst das Gehäuse eine Oberschale und eine Unterschale, die werkzeugfrei und/oder zerstörungsfrei voneinander getrennt und wieder zusammengefügt werden können.

In der Oberschale ist eine Tastenanordnung befestigt, die dazu ausgebildet ist, von einer Außenseite des Gehäuses, insbesondere von der Außenseite der Oberschale, betätigt zu werden. Üblicherweise umfasst die Tastenanordnung vorzugsweise mindestens zwei, insbesondere mindestens vier Tasten, wobei die Notruftaste eine der Tasten der Tastenanordnung bildet. Insbesondere weist die Notruftaste eine rote Farbe und/oder eine größere Fläche als die anderen Tasten der Tastenanordnung auf und ist so für den Benutzer leicht erkenn- und/oder fühlbar.

Die Tastenanordnung ist dazu ausgebildet, bei und/oder nach einer Betätigung eine elektronische Schaltanordnung zu aktivieren. Die elektronische Schaltanordnung ist vorzugsweise in der Unterschale integriert und in einem geschlossenen Zustand des Gehäuses für den Benutzer nicht sichtbar angeordnet. Bei und/oder nach der Aktivierung der elektronischen Schaltanordnung, insbesondere durch ein Drücken durch die Notruftaste, wird z. B. eine automatische Sprechverbindung über ein Telefonnetz aufgebaut und/oder ein Alarmsignal an die Zieladresse übertragen.

Weiterhin weist das Notruftelefon eine Speichereinrichtung zur Speicherung von Funktionen und Daten auf. Vorzugsweise ist das Notruftelefon dazu ausgebildet, die Funktionen und Daten zu erfassen und auf der Speichereinrichtung zu speichern. Beispielsweise umfassen die Funktionen und Daten Angaben und/oder Informationen zu einem Einsatz und/oder Betrieb des Notruftelefons, zu dessen Benutzer und/oder zu der mindestens einen Zieladresse. Insbesondere ist die Speichereinrichtung in dem Gehäuse integriert und in einem Bereich, vorzugsweise in der Unterschale, angeordnet, der durch das werkzeugfreie und/oder zerstörungsfreie Öffnen zugänglich gemacht wird.

Erfindungsgemäß ist die Speichereinrichtung dazu ausgebildet, aus dem Gehäuse entnommen und wieder eingesetzt oder durch eine andere Speichereinrichtung ersetzt zu werden.

Der Vorteil an dem erfindungsgemäßen Notruftelefon ist, dass es durch die auswechselbare Speichereinrichtung ermöglicht wird, neue und/oder zusätzliche Funktionen und Daten auf das Notruftelefon zu übertragen. Beispielsweise kann einfach und schnell ein Software- und/oder Funktionsupdate erfolgen und/oder eine Aktualisierung bzw. Erweiterung der gespeicherten Daten vorgenommen werden. Die Funktionen und Daten des Notruftelefons können so in vorteilhafter Weise individuell auf den Benutzer des Notfalltelefons abgestimmt werden. Das Notfalltelefon ist auch bei einem Benutzer- und/oder Anwendungswechsel jederzeit flexibel einsetzbar. Besonders bevorzugt sind alle Daten und Funktionen auf der Speichereinrichtung hinterlegt, die für einen Normalbetrieb notwendig sind, so dass bei einem Wechsel des Notfalltelefons die Speichereinrichtung des alten Notfalltelefons in das neue Notfalltelefon eingesetzt werden kann und alle insbesondere personalisierten Daten und Funktionen wieder zur Verfügung stehen.

Es ist weiterhin von Vorteil, dass die Daten und Funktionen der Speichereinrichtung auf eine andere Speichereinrichtung übertragen werden können und so eine Daten- und/oder Funktionssicherung durchzuführen. Ein Ausfall des Notruftelefons durch Daten- und/oder Funktionsverlust kann so vermieden werden bzw. durch Einsetzen der anderen Speichereinrichtung in einfacher und schneller Weise behoben werden.

In einer bevorzugten Ausführungsform der Erfindung ist die Speichereinrichtung als eine Speicherkarte oder als ein Memorystick ausgebildet. Vorzugsweise weist die Speicherkarte einen nicht-flüchtigen, permanenten oder semi-permanenten Speicher auf. Insbesondere können beliebige Daten wie Text, Bilder, Audio und/oder Video auf der Speicherkarte gespeichert werden. Mögliche Speicherkartenvarianten sind Compact Flash (CF), Memory Stick (MS), Multimediacard (MMC), Secure Digital Memory Card (SB) und/oder Smart Media (SM). Bei dem Memory Stick handelt es sich vorzugsweise um einen USB-Stick.

Vorzugsweise ist in der Unterschale ein Programmierfeld mit Programmiertasten angeordnet, das so verschaltet ist, dass nach Betätigung der Programmiertasten individuelle und/oder auf den Benutzer abgestimmte Funktionen und/oder Daten auf der Speichereinrichtung gespeichert werden. Es ist auch möglich, dass über eine Sprachmitteilung und/oder über ein in der Unterschale angeordnetes Display eine Programmieranleitung für die programmierende Person erfolgt.

In einer möglichen Ausführungsform setzen die Funktionen auf der Speichereinrichtung eine anwenderspezifische Einrichtung des Notruftelefons um. Eine mögliche anwenderspezifische Einrichtung betrifft die Ausgabe von Sprachmitteilungen, die den Benutzer bei der Bedienung des Notfalltelefons anleitet, wobei auch die Sprachmitteilungen auf der Speichereinrichtung gespeichert sind. Die Sprachmitteilungen geben vorzugsweise eine Aufforderung zur Betätigung einer bestimmten Taste und/oder eine Rückmeldung, welche Taste vom Benutzer bereits betätigt wurde und welche Funktion damit ausgelöst wird/wurde. Die Rückmeldung kann alternativ oder zusätzlich auch über ein im Notruftelefon integriertes Display oder einen mit dem Notruftelefon verbindbaren Bildschirm an den Benutzer übermittelt werden.

Bei einer weiteren möglichen anwenderspezifische Einrichtung erfolgt die Ausgabe der Sprachmitteilung beispielsweise in der Muttersprache des Benutzers und/oder mit einer Stimme und/oder Klangfarbe einer vertrauten Person. Insbesondere kann eine anwenderspezifische Einrichtung auch eine Sprachsteuerung des Notruftelefons durch den Benutzer umfassen, die vorzugsweise auf den Benutzer eingelernt oder personalisiert ist. Vorstellbar ist auch, dass eine andere anwenderspezifische Einrichtung die Ausgabe einer auf den Benutzer abgestimmte, periodisch wiederkehrende Sprachmitteilung umfasst.

In einer weiteren möglichen Ausgestaltung der Erfindung umfassen die Funktionen personalisierte Nachrichtenfunktionen, die auf der Speichereinrichtung gespeichert sind. Vorzugsweise sind die personalisierten Nachrichtenfunktionen individuell auf den Benutzer abgestimmt und/oder abstimmbar. Beispielsweise wird der Benutzer bei der Sprachmitteilung durch Voice Mail persönlich mit seinem Namen angesprochen. Möglich ist, dass die Nachrichtenfunktion eine Sprachmitteilung mit einer Stimme einer dem Benutzer vertrauten und/oder nahe stehenden Person ausgibt. So kann es sich bei den Sprachmitteilungen beispielsweise um Anweisungen handeln, bei denen auf einen Aufenthaltsort hingewiesen wird, den der Benutzer aufsuchen soll oder nicht verlassen soll. Denkbar ist auch, dass eine Erinnerung an eine Einnahme von bestimmten Medikamenten erfolgt, auf die der Benutzer angewiesen ist. Vorstellbar ist, dass die personalisierten Nachrichtenfunktionen Sprachmitteilungen ausgeben, die zu individuell auf den Benutzer festgelegten Zeitpunkten an den Benutzer übermittelt werden. So kann der Benutzer z.B. zweimal am Tag dazu aufgefordert werden, eine bestimmte Taste der Tastenanordnung zu drücken, um sich so bei der Zieladresse rückzumelden.

Vorzugsweise ist das Notruftelefon kabellos mit einem oder mehreren Auslösegeräten verbunden oder verbindbar. Insbesondere weist/weisen das oder die Auslösegeräte ebenfalls eine Notruftaste auf. Im Allgemeinen ist das Notruftelefon und das Auslösegerät dazu ausgebildet, über Funk miteinander in Kontakt zu stehen und/oder zu kommunizieren. Ein mit dem Auslösegerät ausgelöster Alarm wird per Funk an das Notruftelefon übertragen und von dort über die Telefonleitung an die Zieladresse weitergeleitet. Das Auslösegerät kann als ein mobiles Auslösegerät oder als ein zu installierendes Auslösegerät ausgebildet sein. Vorzugsweise weist das Auslösegerät ein Mikrofon und einen Lautsprecher zur Übermittlung von Sprachnachrichten auf, die vorzugsweise auf der Speichereinrichtung des Notruftelefons gespeichert und per Funk an das Auslösegerät übertragen werden. Möglich ist auch, dass die Sprachnachrichten durch die Notrufzentrale an den Benutzer übermittelt werden und der Benutzer mit der Notrufzentrale kommunizieren kann.

Üblicherweise ist das mobile Auslösegerät dazu ausgebildet, vom Benutzer am Körper getragen zu werden. So ist das mobile Auslösegerät beispielsweise als ein Clip zur Befestigung an einem Kleidungsstück, als eine Halskette oder als ein Armband ausgebildet. Das zu installierende Auslösegerät kann als ein Zugschalter mit Zugkordel oder als eine Notruffliese mit Notruftaste ausgebildet sein. Diese sind z.B. in einem Schlafzimmer oder Badezimmer in Reichweite des Benutzers installiert. Das Auslösegerät hat den Vorteil, dass der Benutzer jederzeit in einer Notsituation Zugriff auf die Notruftaste hat und Alarm auslösen kann. So ermöglicht das Auslösegerät dem Benutzer, ohne Zeitverzögerung Hilfe zu holen, auch wenn er sich nicht in der Nähe des Notruftelefons aufhält oder sich dieses außer seiner Reichweite befindet. Insbesondere kann der Benutzer auch zumindest einen Teil der Funktionen und/oder Daten des Notfalltelefons nutzen. So kann er mit dem Auslösegerät beispielsweise alle auf der Speichereinrichtung gespeicherten Sprachnachrichten empfangen.

Eine weitere Ausführungsform der Erfindung sieht vor, dass die Funktionen eine Funktion zur Identifizierung und/oder Lokalisierung des Notruftelefons und/oder des Benutzers umfassen. Vorzugsweise kann die Zieladresse von extern die Identifizierung und/oder Lokalisierung durchführen. Insbesondere weist das Notruftelefon und/oder das Auslösegerät einen aktiven oder passiven Sender auf, der durch eine separate und/oder vom Sender örtliche getrennte Empfangsstation identifiziert und/oder geortet werden kann. Im Speziellen ist in dem Notruftelefon und/oder in dem Auslösegerät und/oder in einer Identifikationsmarke ein RFID-Chip integriert. Über den RFID-Chip können das Notruftelefon und/oder der Benutzer von der Zieladresse mit Hilfe von elektromagnetischen Wellen erkannt und räumlich geortet werden. Vorstellbar ist, dass die Zieladresse einen Aufenthaltsort des Benutzers feststellen kann. Dies ist insbesondere bei dementen Personen von Vorteil, die nach Verlassen Ihrer Wohnung und/oder ihres Zimmers oft Mühe haben, zum richtigen Ort zurückzufinden. Durch das Tragen des mobilen Auslösegeräts ist es vorzugsweise ebenso möglich, dass bei einem Verlassen eines bestimmten Aufenthaltsbereichs eine Sprachmitteilung und/oder Warnmitteilung über das Auslösegerät erfolgt, die den Benutzer auf das Verlassen des Aufenthaltsbereichs hinweist und/oder diesen auffordert, diesen nicht zu verlassen und/oder umzukehren. Möglich ist auch, dass in dem Notruftelefon ein Ortungsmodul integriert ist, welches die Identifikationsmarke und/oder das Auslösegerät lokalisiert.

Eine weitere Ausführungsform der Erfindung sieht vor, dass die auf der Speichereinrichtung gespeicherten Daten Überwachungsdaten umfassen. Vorzugsweise umfassen die Überwachungsdaten Funktionsfähigkeitsdaten, Ereignisdaten und/oder Dauerbetriebsdaten. Die Funktionsfähigkeitsdaten sind insbesondere Angaben zur Funktionsfähigkeit des Notruftelefons. In einer besonders bevorzugten Ausführungsform ist das Notruftelefon dazu ausgebildet, in regelmäßigen oder unregelmäßigen Abständen selbstständig Funktionsfähigkeitstests durchzuführen und die Ergebnisse in Form der Funktionsfähigkeitsdaten auf der Speichereinrichtung zu speichern. Beispielsweise kann ein Batteriestandstatuts des Notruftelefons festgestellt und gespeichert werden.

Die Ereignisdaten umfassen vorzugsweise Angaben zur Benutzung und/oder Aktivierung des Notruftelefons. Insbesondere ist das Notruftelefon dazu ausgebildet, die Tatsache und den Zeitpunkt einer Benutzeraktion zu erfassen und auf der Speichereinrichtung zu speichern. Beispielsweise umfassen die Ereignisdaten Angaben zu einer Inbetriebnahme und/oder Deaktivierung des Notfalltelefons, wie z.B. ein Ein- und Ausschalten des Notruftelefons oder eine Unterbrechung des Betriebs durch Stromausfall oder Wechseln der Batterie, etc. Denkbar ist auch, dass das Notruftelefon die Betätigung des Notfallknopfes, eine Rückmeldung des Benutzers bei der Zieladresse, ein Verlassen der häuslichen Umgebung des Benutzers und/oder ein Abrufen oder Übermitteln von Sprachnachrichten, u. v. m., erfasst und auf der Speichereinrichtung speichert.

Die Dauerbetriebsdaten umfassen vorzugsweise alle Daten, die in einem Betriebs- und/oder Stand-by-Modus des Notruftelefons erfasst und auf der Speichereinrichtung aufgezeichnet werden. Sie umfassen üblicherweise auch die Funktionsfähigkeits- und Ereignisdaten.

Vorzugsweise ist das Notruftelefon dazu ausgebildet, die in der Speichereinrichtung gespeicherten Daten, insbesondere die Funktionsfähigkeits-, Ereignis- und/oder Dauerbetriebsdaten, zu protokollieren. Insbesondere wird ein Datenprotokoll erstellt, das einen Zeitpunkt, eine Dauer, die Benutzeraktion und/oder eine Zieladressenaktion aufzeigt. Vorzugsweise ist das Datenprotokoll vom Benutzer und/oder der Zieladresse abrufbar. So kann die Speichereinrichtung, auf der das Datenprotokoll gespeichert ist, aus dem Notruftelefon entnommen und/oder von einem geeigneten Lesegerät ausgelesen werden. Vorteilhaft ist, dass eine Beweissicherung durch das gespeicherte Datenprotokoll gewährleistet ist, da ein Nachweis über Ereignisse und Aktionen am und/oder mit dem Notruftelefon erfolgen kann.

Eine weitere mögliche Ausgestaltung der Erfindung sieht vor, dass die auf der Speichereinrichtung gespeicherten Daten Benutzerdaten umfassen. Vorzugsweise umfassen die Benutzerdaten personenbezogene Daten und medizinische Daten. Bei den personenbezogenen Daten handelt es sich beispielsweise um Name, Adresse, Telefonnummer, Geburtsdatum, etc. des Benutzers. Insbesondere umfassen die personenbezogenen Daten Angaben und/oder Kontaktdaten zu Familie, nahe stehenden Verwandten und/oder Betreuern des Benutzers, die beispielsweise in einem Notfall zu verständigen sind. Es ist von Vorteil, dass der Benutzer durch ein Auslesen der personenbezogenen Daten aus der Speichereinrichtung bei einem Unfall und/oder in einer Notsituation schnell und einfach identifiziert und die richtigen Personen kontaktiert werden können.

Die medizinischen Daten umfassen insbesondere eine Krankheitsgeschichte, wie z.B. eine Diagnose einer Erkrankung des Benutzers, eventuelle Vorerkrankungen des Benutzers, Krankenhausaufenthalte, u. v. m. Insbesondere umfassen die medizinischen Daten auch Angaben zu verordneten Medikamenten und Einnahmezeiten und/oder die Kontaktdaten des zuständigen Haus- oder Facharztes. Vorteilhaft ist, dass dem Benutzer in einem Notfall schnell und effektiv geholfen werden kann, da alle notwendigen medizinischen Daten vor Ort auf der Speichereinrichtung gespeichert und durch die Möglichkeit der Entnahme der Speichereinrichtung durch ein geeignetes Lesegerät abrufbar und/oder anzeigbar sind.

Eine weitere mögliche Ausgestaltung der Erfindung sieht vor, dass die Funktionen Datenschutzfunktionen umfassen und auf der Speichereinrichtung gespeichert sind. Vorzugsweise ist das Notruftelefon dazu ausgebildet, die Daten, insbesondere die Benutzerdaten, gegen ein missbräuchliches Abrufen und/oder Herunterladen zu sperren. Insbesondere können unberechtigte Personen nicht auf die Daten, die auf der Speichereinrichtung gespeichert sind, zugreifen. Im Speziellen sind auch Sprechmitteilungen und/oder Voice Mails gesondert geschützt gespeichert. Vorzugsweise sind die Daten, Sprechmitteilungen und/oder Voice Mails verschlüsselt abgespeichert oder auf einem separaten lokalen Speicher des Notfalltelefons abgelegt. Es ist weiterhin vorstellbar, dass eine Inbetriebnahme des Notfalltelefons nur durch die Eingabe eines Passwortes oder einer PIN erfolgen kann. Beispielsweise kann die Eingabe über bestimmte Sprachmitteilungen, Spracherkennung und/oder Drücken einer voreingestellten Tastenkombination erfolgen.

Ein weiterer Gegenstand der Erfindung betrifft ein Verfahren zum Entnehmen und Wiedereinsetzen der Speichereinrichtung in das Notruftelefon, wobei das Notruftelefon vorzugsweise nach der bisherigen Beschreibung und/oder den vorhergehenden Ansprüchen ausgebildet ist. Zuerst wird das Gehäuse des Notruftelefons werkzeug- und/oder zerstörungsfrei geöffnet und danach die Speichereinrichtung aus dem Gehäuse entnommen. Anschließend werden neue und/oder zusätzliche Daten und/oder Funktionen auf der Speichereinrichtung gespeichert. Vorzugsweise umfassen die Daten die Überwachungs- und/oder Benutzerdaten. Insbesondere umfassen die Funktionen die anwenderspezifische Einrichtung, die personalisierten Nachrichtenfunktionen und/oder die Identifizierung und/oder Lokalisierung des Notruftelefons. Danach wird die Speichereinrichtung wieder in das Gehäuse eingesetzt und zuletzt das Gehäuse werkzeug- und/oder zerstörungsfrei geschlossen.

Ein weiterer Gegenstand der Erfindung betrifft ein Verfahren zum Ersetzen der Speichereinrichtung durch eine andere Speichereinrichtung in dem Notruftelefon. Vorzugsweise ist das Notruftelefon nach der bisherigen Beschreibung und/oder einem der vorhergehenden Ansprüche ausgebildet. Das Gehäuse des Notruftelefons wird zuerst werkzeug- und/oder zerstörungsfrei geöffnet und anschließend die Speichereinrichtung aus dem Gehäuse entnommen. Danach wird eine andere Speichereinrichtung in das Gehäuse eingesetzt. Vorzugsweise weist die andere Speichereinrichtung andere, neue und/oder zusätzliche Daten und/oder Funktionen auf. Insbesondere umfassen die Daten die Überwachungs-und/oder Benutzerdaten und die Funktionen die Umsetzung der anwenderspezifischen Einrichtung, die personalisierten Nachrichtenfunktionen und/oder die Identifizierung und/oder Lokalisierung des Notruftelefons. Zuletzt wird das Gehäuse werkzeug- und/oder zerstörungsfrei geschlossen.

In einer bevorzugten Ausführungsform wird das Notruftelefon durch eines der beiden beschriebenen Verfahren neu konfiguriert. Insbesondere wird das Notruftelefon durch das Entnehmen der Speichereinrichtung, der Speicherung neuer und/oder zusätzlicher Daten und/oder Funktionen auf die Speichereinrichtung und das Wiedereinsetzen der Speichereinrichtung in das Gehäuse neu konfiguriert. Vorstellbar ist auch, dass die Speichereinrichtung aus dem Gehäuse entnommen und durch eine andere Speichereinrichtung ersetzt wird, wobei die andere Speichereinrichtung andere, neue und/oder zusätzliche Daten und/oder Funktionen aufweist und das Notruftelefon dadurch neu konfiguriert wird.

In einer weitern möglichen Ausbildung der Erfindung kann das Notruftelefon, im weiteren als erstes Notruftelefon bezeichnet, bei Bedarf, insbesondere bei einem Defekt oder einem Ausfall des ersten Notruftelefons, problemlos durch ein zweites Notruftelefon ersetzt werden. Indem die Speichereinrichtung aus dem ersten Notruftelefon entnommen und in das zweite Notruftelefon eingesetzt wird sind vorzugsweise alle auf der Speichereinrichtung gespeicherten Daten und Funktionen des ersten Notruftelefons auch auf dem zweiten Notruftelefon verfügbar und/oder von diesem abrufbar.

Es ist von Vorteil, dass das zweite Notruftelefon durch das Einlegen der Speichereinrichtung des ersten Notruftelefons in das zweite Notruftelefon sofort wieder voll betriebsbereit und ohne Verzögerung für den Gebrauch eines bestimmten Benutzers verwendbar ist. Dies ist insbesondere möglich, da das zweite Notruftelefon ebenfalls alle bereits für den Betrieb des ersten Notruftelefons auf der Speichereinrichtung gespeicherten Funktionen, insbesondere die auf den Benutzer zugeschnittenen, anwenderspezifischen Funktionen und/oder personalisierten Nachrichtenfunktionen umsetzen kann. Weiterhin weist das zweite Notruftelefon alle bereits für den Betreib des ersten Notruftelefons auf der Speichereinrichtung gespeicherten Daten, wie z.B. die Überwachungsdaten und/oder Benutzerdaten auf. Besonders vorteilhaft ist, das zu einer benutzerspezifischen Konfiguration des zweiten Notruftelefons vor einer Inbetriebnahme nur die Speichereinrichtung des ersten Notruftelefons eingesetzt werden muss und auf eine zeitaufwendige Programmierung des zweiten Notruftelefons verzichtet werden kann.

Weitere Merkmale, Vorteile und Wirkungen der Erfindung ergeben sich aus der nachfolgenden Beschreibung bevorzugter Ausführungsbeispiele der Erfindung, sowie den beigefügten Figuren.

Dabei zeigen:
- Figur 1: eine perspektivische Ansicht auf ein Notruftelefon;
- Figur 2: eine Draufsicht auf eine Unterschale eines Notruftelefon;
- Figur 3: ein Blockdiagramm eines Notruftelefons mit einem Auslösegerät.

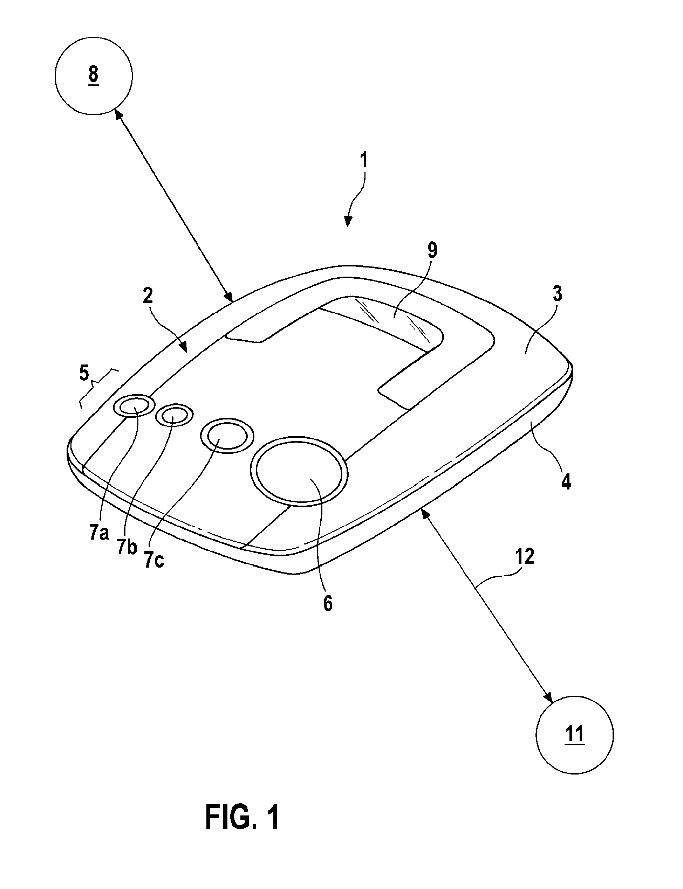

Ein Ausführungsbeispiel der Erfindung ist in Fig. 1 gezeigt, in der eine perspektivische Darstellung eines Notruftelefons 1 dargestellt ist. Das Notruftelefon 1 weist ein Gehäuse 2 auf, das eine Oberschale 3 und eine Unterschale 4 umfasst. Die Oberschale 3 und Unterschale 4 sind form- und/oder kraftschlüssig miteinander verbunden und werkzeugfrei voneinander lösbar angeordnet. Die Oberschale 3 weist eine Betätigungseinrichtung 5 auf, die in der Oberschale 3 befestigt und/oder integriert ist. Die Betätigungseinrichtung 5 umfasst eine Notruftaste 6, die kreisrund ausgebildet ist und eine rote Farbe aufweist. Die Betätigungseinrichtung 5 umfasst zudem drei weitere Tasten 7a;

7b; 7c, die deutlich unauffälliger ausgebildet sind und deren Flächen jeweils vorzugsweise bis zu 55%, insbesondere bis zu 65%, im Speziellen bis zu 75% der Fläche der Notruftaste 6 umfassen. Die weiteren Tasten 7a; 7b; 7c weisen die Farbe grau auf. Aufgrund der Farbgestaltung und der Größenunterschiede zwischen den weiteren Tasten 7a; 7b; 7c und der Notruftaste 6 fällt die Notruftaste 6 sofort ins Auge und ist für einen Benutzer 8 leicht zu finden und zu betätigen.

Die Oberschale 3 weist weiterhin ein Fenster 9 auf, das einen Blick auf ein Display 10 ermöglicht, das in einem Inneren des Gehäuses 2 in der Unterschale 4 angeordnet ist. Das Display 10 ist dazu ausgebildet, Informationen zum Betrieb und Angaben zu Funktionen des Notruftelefons 1 anzuzeigen. So wird angezeigt, wenn ein Batteriestand schwach ist, ob eine Inbetriebnahme oder Aktivierung des Notruftelefons 1 erfolgte, ob das Notruftelefon 1 in einem Stand-by-Modus steht und/oder ob eine Sprachmitteilung auf Abruf wartet, etc.

Die Notruftaste 6 ist dazu ausgebildet, nach einer Betätigung durch den Benutzer 8, einen Notruf und/oder Alarm bei einer Notrufzentrale 11 abzusetzen und/oder auszulösen. Durch das Auslösen des Notrufs und/oder des Alarms wird ein optisches Warnsignal bei der Notrufzentrale 11 aktiviert und/oder eine Sprechverbindung zwischen dem Benutzer 8 und der Notrufzentrale 11 hergestellt. Die Sprechverbindung erfolgt über eine Telefonleitung 12, über die eine Kommunikation zwischen einem Benutzer 8 und der Notrufzentrale 11 erfolgen kann. Das Notruftelefon 1 weist ein in der Figur 1 nicht gezeigtes Mikrofon und einen Lautsprecher auf, das die Kommunikation zwischen dem Benutzer 8 und der Notrufzentrale 11 ermöglicht. Durch die Sprechverbindung kann der Benutzer 8 einen Grund für den Notruf und/oder Alarm an die Notrufzentrale 11 übermitteln. Im Gegenzug erreichen den Benutzer 8 die Reaktionen und Antworten der Notrufzentrale 11.

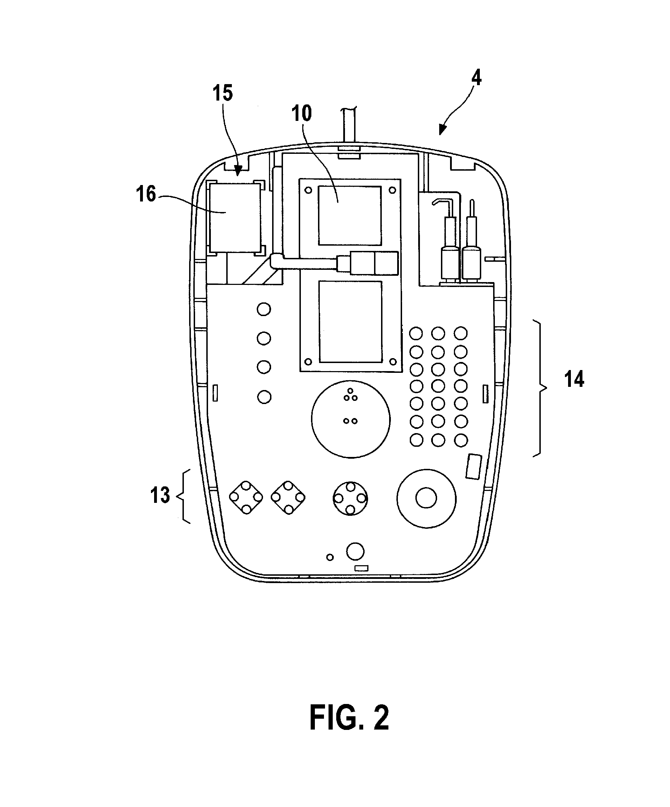

Figur 2 zeigt eine Draufsicht auf die Unterschale 4 des Notruftelefons 1 aus Figur 1. Einander entsprechende oder gleiche Teile sind in den Figuren jeweils mit den gleichen Bezugszeichen versehen. Die Unterschale 4 umfasst eine elektronische Schaltanordnung 13, die dazu ausgebildet ist, von der Betätigungseinrichtung 5, insbesondere von der Notfalltaste 6 und/oder den weiteren Tasten 7a; 7b; 7c betätigt zu werden.

In der Unterschale 4 ist ein Programmierfeld 14 mit Programmiertasten angeordnet, das zu einer benutzerdefinierten Einrichtung des Notruftelefons 1 ausgebildet ist. Bei einer Betätigung des Programmierfelds und Aufnahme der benutzerdefinierten Einrichtung des Notruftelefons 1 erscheint automatisch eine Programmieranleitung auf dem Display 10.

Die Unterschale 4 umfasst eine Aufnahme 15 für eine Speichereinrichtung 16 zur Speicherung von Daten und Funktionen. Die Speichereinrichtung 16 ist als eine Speicherkarte ausgebildet. Die Aufnahme 15 ist im Wesentlichen rechteckig ausgebildet und an die Maße der Speichereinrichtung 16 angepasst. Die Speichereinrichtung 16 ist dazu ausgebildet, bei geöffnetem Gehäuse 2 beschädigungsfrei in die Aufnahme 15 eingelegt und wieder entnommen oder durch eine andere Speichereinrichtung ersetzt zu werden.

Durch die Auswechselbarkeit der Speichereinrichtung 16 ist es möglich, neue und/oder zusätzliche Daten und Funktionen auf der Speichereinrichtung 16 zu speichern und damit die Daten und Funktionen das Notfalltelefons 1 zu ergänzen und/oder abzuändern.

Die in der Speichereinrichtung 16 gespeicherten Funktionen umfassen eine anwenderspezifische Einrichtung des Notfalltelefons 1, mit der auf individuelle Bedürfnisse des Benutzers 8 eingegangen wird, und personalisierte Nachrichtenfunktionen, die auf den Benutzer 8 persönlich ausgerichtet sind.

Die anwenderspezifische Einrichtung umfasst eine individuell für den Benutzer 8 gespeicherte Sprachmitteilung per Voice Mail, die automatisch in festgelegten Zeitintervallen an den Benutzer 8 übermittelt werden. Eine weitere auf der Speichereinrichtung 16 gespeicherte Voice Mail ertönt, wenn der Benutzer 8 oder ggf. eine andere zuständige Person eine Taste der Tastenanordnung 5 oder des Programmierfeldes 14 betätigt. Die Voice Mail kann den Benutzer 8 oder die andere zuständige Person bei der Bedienung und/oder Programmierung des Notfalltelefons 1 unterstützen. So erfolgt durch das Voice Mail eine Erklärung von Tastenfunktionen und Informationen zu bereits vorgenommenen Einstellungen am Notfalltelefon 1. Die Voice Mail kann, bei entsprechender Speicherung der Funktion auf der Speichereinrichtung 16, in einer individuellen (Mutter-) Sprache des Benutzers 8 und/oder in einer bevorzugten Klangfarbe übermittelt werden. Alternativ und/oder ergänzend können die Erklärung und die Informationen auch auf dem Display 9 angezeigt werden. Eine weitere anwenderspezifische Einrichtung, die ebenfalls auf der Speichereinrichtung 16 gespeichert ist, umfasst eine Sprachsteuerung des Notfalltelefons 1 durch die Stimme des Benutzers 8.

Durch die auf der Speichereinrichtung 16 gespeicherten personalisierten Nachrichtenfunktion sind die Sprachmitteilungen individuell auf den Benutzer 8 abstimmbar bzw. abgestimmt. Der Benutzer 8 wird mit der Stimme einer ihm vertrauten und/oder nahe stehenden Person persönlich mit seinem Namen angesprochen. Er wird morgens, mittags und abends zum Drücken der Taste 7b aufgefordert, um sich so bei der Notrufzentrale 11 rückzumelden. Weiterhin erhält der Benutzer 8 regelmäßige Hinweise, die ihn zu einem richtigen Zeitpunkt an eine Einnahme von Medikamenten erinnern.

Weiterhin ist die Speichereinrichtung 16 ist dazu ausgebildet, Benutzerdaten zu speichern. Die Benutzerdaten setzen sich aus personenbezogenen und medizinischen Daten zusammen. Die personenbezogenen Daten geben Auskunft über Name, Adresse, Telefonnummer und Geburtsdatum des Benutzers 8 und enthalten Kontaktdaten zu einer im Notfall zu verständigenden Person. Die medizinischen Daten umfassen eine Diagnose des Benutzers 8, Informationen zu möglichen Unverträglichkeiten, die Namen und Dosierungen von einzunehmenden Medikamenten und die Kontaktdaten eines zuständigen Hausarztes.

Das Notfalltelefon 1 ist dazu ausgebildet, die Benutzerdaten vor einem Missbrauch zu schützen. Eine Datenschutzfunktion ist auf der Speichereinrichtung 16 gespeichert. Durch die Datenschutzfunktion werden die Benutzerdaten verschlüsselt und nur nach Eingabe einer bestimmten Tastenkombination oder einer Sprachmitteilung ausgegeben.

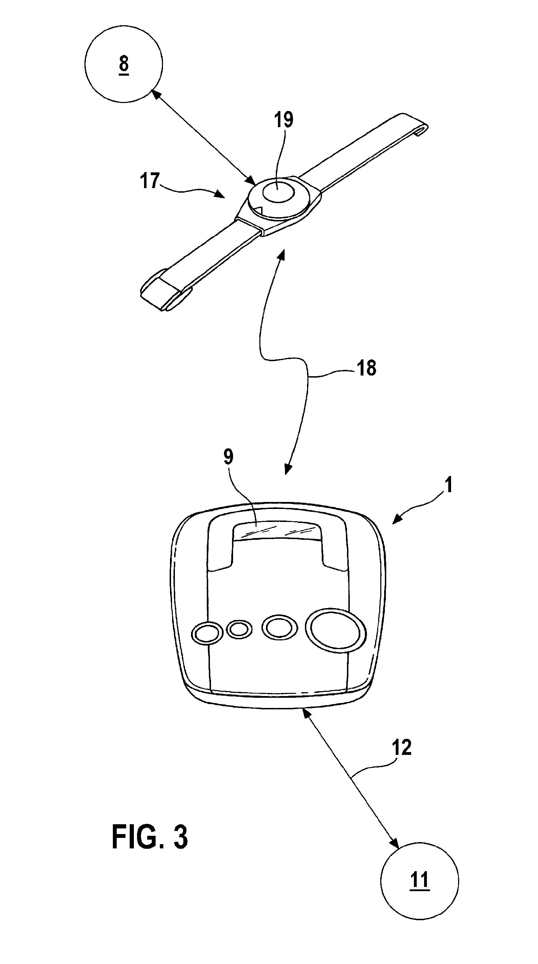

Figur 3 zeigt eine Blockdarstellung des Notruftelefons 1 aus Figur 1, das ein mobiles Auslösegerät 17 umfasst. Einander entsprechende oder gleiche Teile sind in den Figuren jeweils mit den gleichen Bezugszeichen versehen. Das Notruftelefon 1 ist über eine Funkverbindung 18 mit dem mobilen Auslösegerät 17 verbunden. Das mobile Auslösegerät 17 ist als ein Armband ausgebildet und dazu geeignet, vom Benutzer 8 am Handgelenk getragen zu werden. Es umfasst ein Mikrofon und einen Lautsprecher, die in der Figur 3 nicht gezeigt sind.

Das mobile Auslösegerät 17 weist einen Notfallknopf 19 auf, mit dem der Benutzer 8 jederzeit- über die Funkverbindung 18 zum Notruftelefon 1 und die Telefonverbindung 12 zur Notrufzentrale 11- Alarm auslösen und Hilfe holen kann. So kann er mit der Notrufzentrale 11 kommunizieren, auch wenn er zu diesem Zeitpunkt das Notfalltelefon 1 nicht erreichen kann oder sich nicht in der Nähe des Notfalltelefons 1 aufhält. Das Notruftelefon 1 ist dazu ausgebildet, dem Benutzer 8 die auf der Speichereinrichtung 16 gespeicherten Sprachmitteilungen per Funk auf das mobile Auslösegerät 17 zu übermitteln.

Das Notruftelefon 1 weist die in der Speichereinrichtung 16 gespeicherte Funktion zur Identifizierung und/oder Lokalisierung des Notruftelefons 1 auf. Auch das mobile Auslösegerät 17 weist diese Funktion auf. Die Notrufzentrale 11 1 kann das Notruftelefon 1 und das mobile Auslösegerät 17 durch einen dort integrierten RFID-Chip räumlich orten und dem Benutzer 8 eindeutig zuordnen. Dadurch dass der Benutzer 8 das mobile Auslösegerät 17 am Körper trägt, kann ein Aufenthaltsort des Benutzers 8 jederzeit bestimmt werden. Stellt die Notrufzentrale 11 fest, dass der Benutzer 8 einen gewissen Aufenthaltsbereich verlässt, so übermittelt die Notrufzentrale 11 eine Sprechmitteilung mit einer Aufforderung zur Rückkehr über die Telefonleitung 12 zum Notruftelefon 1. Über die Funkverbindung 18 wird die Sprechmitteilung an den Benutzer 8 weitergeleitet.

Die Speichereinrichtung 16 ist dazu ausgebildet, Überwachungsdaten des Notruftelefons 1 zu speichern. Bei den Überwachungsdaten handelt es sich um Funktionsfähigkeitsdaten und Ereignisdaten des Notruftelefons 1 und des mobilen Auslösegeräts 17. Das Notruftelefon 1 ist dazu ausgebildet, einmal täglich selbstständig einen Funktionsfähigkeitstest am Notruftelefon 1 und am mobilen Auslösegerät 17 durchzuführen. Insbesondere wird ein Batteriestandsstatus festgestellt. Alle Ereignisse, wie z.B. die Rückmeldung des Benutzers 8, die Betätigung der Notruftaste 6, die Übermittlung von Sprechmitteilungen und/oder Voice Mail, etc., werden auf der Speichereinrichtung 16 in Form von Ereignisdaten gespeichert.

Das Notruftelefon 1 ist dazu ausgebildet, die gespeicherten Überwachungs- und Ereignisdaten zu protokollieren und als ein Datenprotokoll auf der Speichereinrichtung 16 zu speichern. Das Datenprotokoll hält den Zeitpunkt und das Ergebnis der Funktionsfähigkeitstests fest und zeigt alle Ereignisse am und/oder mit dem Notruftelefon 1 auf. Das Datenprotokoll ist vom Benutzer 8 und/oder der Zieladresse 11 nach Entnahme der Speichereinrichtung 16 aus dem Gehäuse 2 abrufbar.

## Patentansprüche

1. Notruftelefon (1) mit einer Notruftaste (6),
wobei das Notruftelefon (1) ausgebildet ist, bei und/oder nach Betätigung der Notruftaste (6) einen Notruf an eine Zieladresse (11) abzusetzen,
mit einem Gehäuse (2), das dazu ausgebildet ist, zumindest teilweise werkzeug- und/oder zerstörungsfrei geöffnet und wieder verschlossen zu werden,
mit einer Speichereinrichtung (16) zur Speicherung von Funktionen und Daten
**dadurch gekennzeichnet, dass**
die Speichereinrichtung (16) dazu ausgebildet ist, aus dem Gehäuse (2) entnommen und wieder eingesetzt oder durch eine andere Speichereinrichtung (16) ersetzt zu werden.

2. Notruftelefon (1) nach Anspruch 1,
**dadurch gekennzeichnet, dass** die Speichereinrichtung (16) als eine Speicherkarte oder als ein Memorystick ausgebildet ist.

3. Notruftelefon (1) nach Anspruch 1 oder 2,
**dadurch gekennzeichnet, dass** die Funktionen eine anwenderspezifische Einrichtung des Notruftelefons (1) umsetzen.

4. Notruftelefon (1) nach einem der vorhergehenden Ansprüche, **dadurch gekennzeichnet, dass** die Funktionen personalisierte Nachrichtenfunktionen umfassen.

5. Notruftelefon (1) nach einem der vorhergehenden Ansprüche, **dadurch gekennzeichnet, dass** das Notruftelefon (1) mit einem oder mehreren Auslösegeräten (17) verbunden oder verbindbar ist.

6. Notruftelefon (1) nach einem der vorhergehenden Ansprüche, **dadurch gekennzeichnet, dass** die Funktionen eine Identifizierung und/oder Lokalisierung des Notruftelefons (1) und/oder des Benutzers (8) umfassen.

7. Notruftelefon (1) nach einem der vorhergehenden Ansprüche,
**dadurch gekennzeichnet, dass** die Daten Überwachungsdaten umfassen.

8. Notruftelefon (1) nach Anspruch 7,
**dadurch gekennzeichnet, dass** die Überwachungsdaten Funktionsfähigkeitsdaten, Ereignisdaten und/oder Dauerbetriebsdaten umfassen.

9. Notruftelefon (1) nach einem der vorhergehenden Ansprüche,
**dadurch gekennzeichnet, dass** das Notruftelefon (1) dazu ausgebildet ist, die Daten in einem Datenprotokoll auf der Speichereinrichtung (16) zu speichern.

10. Notruftelefon (1) nach einem der vorhergehenden Ansprüche,
**dadurch gekennzeichnet, dass** die Daten Benutzerdaten umfassen.

11. Notruftelefon (1) nach Anspruch 10,
**dadurch gekennzeichnet, dass** die Benutzerdaten personenbezogene Daten und medizinische Daten umfassen.

12. Notruftelefon (1) nach einem der vorhergehenden Ansprüche, **dadurch gekennzeichnet, dass** die Funktionen Datenschutzfunktionen umfassen.

13. Verfahren zum Entnehmen und Wiedereinsetzen der Speichereinrichtung (16) in das Notruftelefon (1) nach einem der vorhergehenden Ansprüche,
**gekennzeichnet durch** folgende Schritte:
- Werkzeug- und/oder zerstörungsfreies Öffnen des Gehäuses (2) des Notruftelefons (1)
- Entnehmen der Speichereinrichtung (16) aus dem Gehäuse (2)
- Speichern neuer und/oder zusätzlicher Daten und/oder Funktionen auf die Speichereinrichtung (16)
- Wiedereinsetzen der Speichereinrichtung (16) in das Gehäuse (2)
- Werkzeug- und/oder zerstörungsfreies Schließen des Gehäuses (2)

14. Verfahren zum Ersetzen der Speichereinrichtung (16) durch eine andere Speichereinrichtung (16) in dem Notruftelefon (1) nach einem der vorhergehenden Ansprüche,
**gekennzeichnet durch** folgende Schritte:
- Werkzeug- und/oder zerstörungsfreies Öffnen des Gehäuses (2) des Notruftelefons (1)
- Entnehmen der Speichereinrichtung (16) aus dem Gehäuse (2)
- Einsetzen einer anderen Speichereinrichtung in das Gehäuse (2)
- Werkzeug- und/oder zerstörungsfreies Schließen des Gehäuses (2)

15. Verfahren nach Anspruch 13 oder 14, **dadurch gekennzeichnet, dass** das Notruftelefon (1) durch das Verfahren nach Anspruch 13 oder 14 neu konfiguriert wird.
